# EUROPEAN PATENT SPECIFICATION

(11) **EP 2 490 581 B1**
(45) Date of publication and mention of the grant of the patent: **02.10.2013**
(21) Application number: 10775746.0
(22) Date of filing: 19.10.2010
(51) Int. Cl.: A47J 31/44

(54) **MILK FROTHING METHOD AND MILK FROTHING DEVICE FOR IMPLEMENTING THE METHOD**
MILCHSCHÄUMUNGSVERFAHREN UND MILCHSCHÄUMER ZUR UMSETZUNG DES VERFAHRENS
PROCÉDÉ DE MOUSSAGE DE LAIT ET DISPOSITIF DE MOUSSAGE DE LAIT POUR LA MISE EN OELIGUVRE DU PROCÉDÉ

(30) Priority: 22.10.2009 IT VE20090064
(43) Date of publication of application: 29.08.2012
(73) Proprietor: Elektra S.R.L., 31030 Casier (Treviso) (IT)
(72) Inventor: FREGNAN, Andrea, I-31030 Casier (IT)
(74) Representative: Piovesana, Paolo
(86) International application number: PCT/EP2010/065690
(87) International publication number: WO 2011/048078

(56) References cited:
- WO-A1-2008/090482
- US-A- 5 769 135
- US-A1- 2009 047 402

## Description

The present invention relates to a milk frothing method and to a milk frothing device for implementing the method.

Milk frothing devices generally consist of a lance provided with two conduits for feeding a steam flow and a suction or compressed air flow, together with a shutoff system for the two flows. During operation, the lance is inserted into a vessel containing the milk to be frothed, such that the steam flow heats it and the suction or compressed air flow froths it, i.e. it is caused to incorporate air particles and to form a soft, creamy froth.

WO 2004/089173 describes a milk frothing device in which the compressed air conduit, connected to the lance, is provided with a three-way valve which connects it selectively to a steam generating source or to atmosphere.

US 6099878 describes another milk frothing device with two cold milk feed lines and two air feed lines upstream of the two pumps which feed the cold milk under pressure.

WO 2001/097668 describes a milk frothing apparatus with a lance integral with the vessel containing the milk to be frothed, and comprising two conduits for steam and for air.

EP 1501398 describes a milk frothing device with a lance to be immersed into the milk to be heated and frothed. It is provided at its end with a temperature sensor connected to a control unit which controls, under the command of the temperature sensor, both a solenoid valve for steam shutoff, and the motor which drives a compressed air pump.

US 2009/0047402 describes a beverage frothing device with a conduit provided with a solenoid valve and a venturi and connected at one end to a steam vessel and at the other end to a lance to be inserted into the beverage to be frothed. The drawing conduit of the venturi is provided with a solenoid valve connected with the exterior to suck air in, which is swept by the steam into the beverage to be frothed.

A drawback of this solution consists in that the water formed by the condensation of the steam of the preceding cycle alters the normal operating conditions at the beginning of the following one, creating difficulties at full capacity, hence in the air suction.

EP 1940829 describes a similar device for beverage frothing, in which the vacuum forming downstream the venturi when the solenoid valves upstream it are closed, and the cooling of the system during the inoperative periods cause the holding and a drawing of the liquid in which the lance is inserted. Therefore this device involves the soiling both of the sized hole of the venturi and of the lance holes, resulting in loss of device functionality and hygiene. Furthermore, it also presents the same drawback already described in US 2009/0047402.

An object of the invention is to provide a milk frothing device which is of more simple construction than known milk frothing devices while at the same time ensuring perfect milk frothing, by preserving its organoleptic characteristics and ensuring continuous system hygiene, coupled with safer and more reliable operation.

This and other objects which will be apparent from the ensuing description are attained, according to the invention, by a milk frothing method as described in claim 1.

To implement the method, a milk frothing device as described in claim 7 can be advantageously used.

The present invention is further clarified hereinafter with reference to the accompanying drawings, in which:

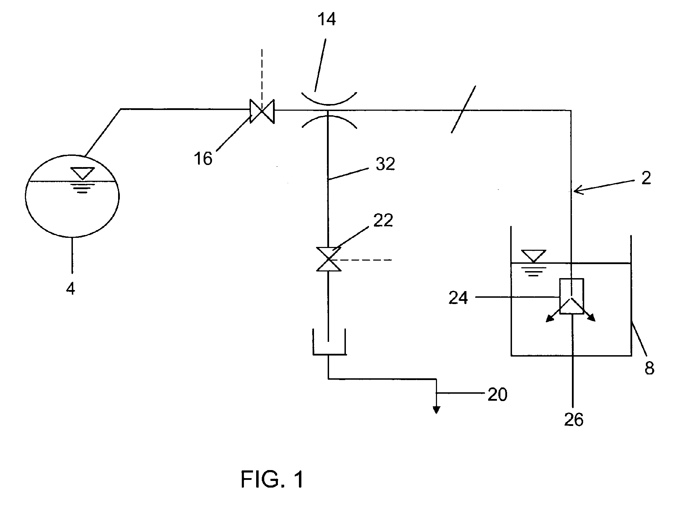

- Figure 1: shows a hydraulic scheme of the milk frothing device according to the invention, and

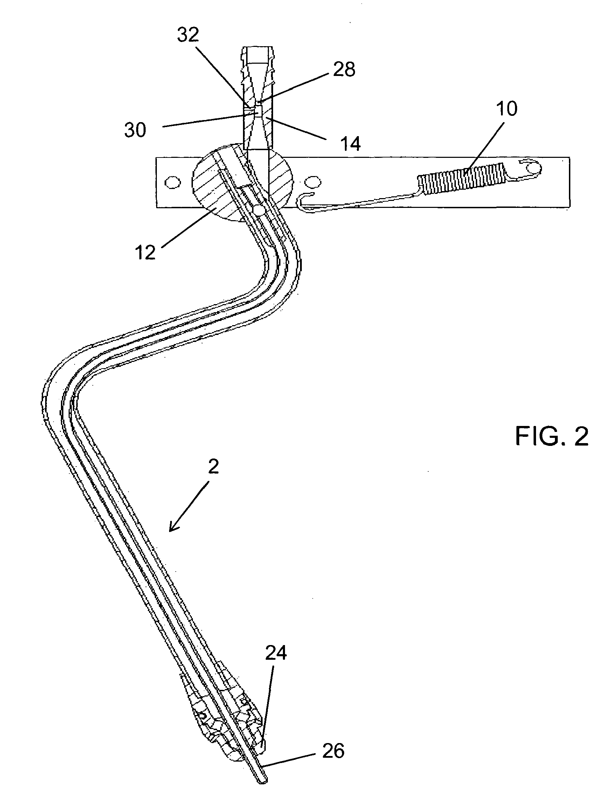

- Figure 2: shows a longitudinal section through the lance.

As can be seen from the figures, the milk frothing device according to the invention comprises a lance 2 applied to a traditional coffee machine, already provided with a steam generation boiler 4.

The lance 2 is hinged to the coffee machine structure such as to be able to pass from an operative position, with its lower end facing the grid on which the jug 8 containing the milk to be frothed rests, to a forward projecting position such as to enable the lance to be inserted into and extracted from the jug.

A spring 10, preferably associated with the articulated joint 12 by which the lance 2 is hinged to the coffee machine structure, elastically maintains the lance in its operative state.

The lance 2 incorporates a small venturi tube 14, of convergentdivergent type, with its upstream side connected to the steam generation boiler 4 via a normally closed (NC) solenoid valve 16 controlled by a control unit for controlling the operative cycle of the milk frothing device.

In addition, the venturi tube 14 has its downstream side connected to the lance 2 and its suction side connected to discharge 20.

A normally open (NO) solenoid valve 22, also controlled by the control unit, is connected into the suction conduit of the venturi 14.

At the end of the lance 2 a spray nozzle 24 is provided together with a temperature probe 26 connected to the control unit.

The venturi tube 14 is designed with dimensional characteristics suitable for the particular function to be performed, i.e. suitable for using the steam produced in the coffee machine boiler 4 to create a suitable mixture with the air withdrawn from the outside for frothing the milk, into which the thermal lance 2 connected to the downstream side of the venturi tube is inserted.

More specifically, the convergent part of the venturi tube 14 leads to a small cylindrical conduit 28 which opens into a small cylindrical mixing chamber 30 into which the suction conduit 32 is inserted and from which the divergent part of the venture 24 extends.

Preferred values of the various dimensions concerned are as follows:
- diameter of cylindrical conduit 1-2 mm,
- length of cylindrical conduit 1-3 mm,
- diameter of mixing chamber 1-3 mm,
- length of mixing chamber 2-6 mm,
- diameter of suction conduit 0.2-1.5 mm.

The spray nozzle provided at the end of the lance has also been designed with characteristics suitable for the specific function to be performed, and specifically comprises four holes of diameter 0.5-1.5 mm.

The milk frothing device of the invention operates in the following manner: after the required milk quantity has been fed into a jug or other vessel, the lance 2 is elastically brought into its projecting state in which it is inserted into the milk contained in the jug, and then brought into the operative position with the jug resting on the grid.

The operator then presses a pushbutton provided on the coffee machine, to start the automatic working cycle. As stated, this is controlled by the control unit and comprises:
- an initial short step in which the NC steam solenoid valve 16 is opened and the NO air solenoid valve 22 is maintained open. The purpose of this first step is to clean the venturi tube 14 of any liquid and moisture present therein and to set it into its correct working state;
- a second step in which the NC steam solenoid valve 16 remains open while the NO air solenoid valve 22 is closed. In this manner, only steam passes through the venturi tube 14 for the purpose of merely heating the milk, in which the lance is immersed, to an intermediate temperature Tᵢ which is less than the final temperature T_{f} of the frothed milk to be obtained, as controlled by the probe 26,
- a third step in which both the NC and NO solenoid valves 16 and 22 are open, such as to froth the milk and complete the heating to the temperature T_{f}, which is controlled by the probe 26.

On termination of the third step the control unit causes the NC steam valve 16 to close and halts the frothing cycle. The operator is able to extract the lance 2 from the frothed milk and enable it to return elastically to its operative position, so avoiding any danger to the operator in case of accidental repetition of the operative cycle or washing with the lance facing the operator.

It is preferable to periodically wash the lance 2, implemented by feeding an appropriate command for opening the NC steam solenoid valve 16. This wash is programmed after a predetermined number of frothing cycles and/or after a certain time from the last cycle. The control unit, which controls this wash, stops the frothing system from operating until the wash is complete.

From the aforegoing the advantages of the method and of the device of the invention are evident, which in particular:
- enables the venturi tube 14 to be purged at each cycle, to free it of the water which forms by condensation during the previous cycle, and ensure correct steam operating conditions from the commencement of each cycle,
- extends the milk heating time, so reducing the exit velocity of the steam, which would otherwise cause violent heating of the milk with the risk of altering its organoleptic characteristics,
- effects the frothing operation on milk which is already partially heated, so preventing its mechanical maltreatment with a prolonged jet of air and steam, while frothing it with the minimum possible air quantity which, inter alia, being perfectly mixed with the steam within the venturi tube 14, forms a milk cream,
- by correctly choosing the parameters of the venturi tube 14, the device is operated at a low steam and suction air flow level: consequently the air flow is very low and enables the spray nozzle 24 to be formed with very small holes, which blow into the milk a steam and air mixture able to form extremely minute and persistent air bubbles within the milk. These in their turn confer considerable creaminess and softness on the frothed milk,
- it is of considerable constructional simplicity by virtue of incorporating the venturi tube 14 within the lance 2, which in this manner forms a single spare part.

## Claims

1. A milk frothing method, by subjecting the milk to a step of merely heating by a flow of steam which emerges from a lance (2) immersed In the milk and raises it to a predetermined temperature less than the final temperature of the frothed milk to be obtained, then subjecting the already partly heated milk to a heating and frothing step by a flow of steam and air which is drawn in through a venturi tube (14) by the same steam flow, **characterized by** immediately preceding the merely heating step by a cleaning and moisture eliminating step from said venture tube, in which step said venturi tube (14) is traversed by a flow of steam and of air entrained by said steam, and by controlling the steam flow by a normally closed solenoid valve (16) and the air flow by a normally open solenoid valve (22).

2. A method as claimed in claim 1 **characterised in that** during frothing of the milk, its temperature is controlled by a temperature probe applied to that end of the lance immersed in the milk.

3. A method as claimed in one or more of the preceding claims. **characterised by** controlling the steam and air flows by solenoid valves (16, 22) controlled by a control unit, to which the temperature probe is also connected.

4. A method as claimed in one or more of the preceding claims, **characterised by** implementing a lance wash step with a steam flow after a predetermined number of milk frothing cycles.

5. A method as claimed in one or more of the preceding claims, **characterised by** implementing a lance wash step with a steam flow after a predetermined time period from the last milk frothing cycle.

6. A method as claimed in one or more of the preceding claims, **characterised by** preventing commencement of the frothing cycle prior to the wash step.

7. A milk frothing device for implementing the method claimed in one of claims 1 to 6, comprising:
- a lance (2) to be immersed in a vessel (8) containing the milk to be frothed, and provided with a conduit for dispensing a flow of steam and air mixture,
- a temperature probe (26) positioned at the end of said lance,
- for the steam and air flows, shutoff means inserted in the conduits feeding said flows to said lance,
- a venturi tube (14) with its upstream conduit connected to a steam source (4) via a first normally closed solenoid valve (16), with its downstream conduit connected to said lance, and with its suction conduit (32) connected to an air source via a second solenoid valve (22), and
- a unit for controlling said solenoid valves
**characterised in that** the second solenoid valve (22) inserted in the suction conduit of said venture tube is of normally open type, and the operative cycle through which the control unit operates said solenoid valves comprises a first cleaning and moisture eliminating step in which the first valve (16) of the steam and the second valve (22) of the air are both opened and a second step of merely heating, in which the first solenoid valve (16) is opened and the second air solenoid valve (22) is closed, and a third step of heating and frothing, in which both the solenoid valves (16, 22) are opened.

8. A device as claimed in claims 7, **characterised in that** the venturi tube (14) is integral with the lance (2).

9. A device as claimed in one or more of the preceding claims, **characterised in that** the temperature probe (26) positioned at the exit end of the lance is connected to said control unit.

10. A device as claimed in one or more of the preceding claims, **characterised in that** the steam source consists of a boiler (4), which is normally provided within a coffee machine.

11. A device as claimed in one or more of the preceding claims, **characterised in that** the lance is mounted hinged to the structure of said coffee machine by means of an articulated joint (12).

12. A device as claimed in one or more of the preceding claims, **characterised in that** a spring (10) is associated with the lance (2) to maintain it elastically pointing towards the underlying grid on which, in coffee machines, the jug (8) containing the milk to be frothed rests.

13. A device as claimed in one or more of the preceding claims, **characterised in that** the venturi tube (14) comprises a converging upstream part, a diverging downstream part, and a part which connects the two upstream and downstream parts together and comprises a short cylindrical conduit (28) followed by a small cylindrical mixing chamber (30), of slightly greater diameter, into which the air suction conduit (32) opens.

14. A device as claimed in one or more of the preceding claims, **characterised in that** the venturi tube (14) has the following dimensions:
- diameter of cylindrical conduit 1-2 mm
- length of cylindrical conduit 1-3 mm,
- diameter of mixing chamber 1-3 mm,
- length of mixing chamber 2-6 mm,
- diameter of suction conduit 0.2-1.5 mm.

## Patentansprüche

1. Milchschäumungsverfahren durch Unterziehen der Milch einem Schritt des bloßen Erhitzens durch einen Dampfstrom, der aus einer in die Milch eingetauchten Lanze (2) austritt und sie auf eine vorbestimmte Temperatur anhebt, die geringer als die zu erzielende Endtemperatur der aufgeschäumten Milch ist, wobei die schon teilweise erhitzte Milch dann einem Erhitzungs- und Aufschäumungsschritt durch einen Dampfstrom und Luft, die durch ein Venturi-Rohr (14) von diesem Dampfstrom angesaugt wird, unterzogen wird, **dadurch gekennzeichnet, dass** dem Schritt des bloßen Erhitzens ein Schritt des Reinigens und des Entfernens der Feuchtigkeit aus dem Venturi-Rohr unmittelbar vorangestellt wird, wobei in diesem Schritt das Venturi-Rohr (14) von einem Strom von Dampf und von Luft, die von diesem Dampf mitgeschleppt wird, durchquert wird, und dass der Dampfstrom von einem normalerweise geschlossenen Magnetventil (16) und der Luftstrom von einem normalerweise geöffneten Magnetventil (22) gesteuert werden.

2. Verfahren nach Anspruch 1, **dadurch gekennzeichnet, dass** während des Aufschäumens der Milch ihre Temperatur von einem Temperaturfühler überwacht wird, der an dem in die Milch eingetauchten Ende der Lanze angebracht ist.

3. Verfahren nach einem oder mehreren der vorhergehenden Ansprüche, **dadurch gekennzeichnet, dass** die Dampf- und Luftströme von Magnetventilen (16, 22) gesteuert werden, die von einer Steuereinheit gesteuert werden, mit der auch der Temperaturfühler verbunden ist.

4. Verfahren nach einem oder mehreren der vorhergehenden Ansprüche, **dadurch gekennzeichnet, dass** ein Schritt des Waschens der Lanze mit einem Dampfstrom nach einer vorbestimmten Anzahl von Milchschäumungszyklen durchgeführt wird.

5. Verfahren nach einem oder mehreren der vorhergehenden Ansprüche, **dadurch gekennzeichnet, dass** ein Schritt des Waschens der Lanze mit einem Dampfstrom nach einem vorbestimmten Zeitraum ab dem letzten Milchschäumungszyklus durchgeführt wird.

6. Verfahren nach einem oder mehreren der vorhergehenden Ansprüche, **dadurch gekennzeichnet, dass** der Start des Schäumungszyklus vor dem Waschschritt verhindert wird.

7. Milchschäumer zur Umsetzung des Verfahrens nach einem der Ansprüche von 1 bis 6, umfassend:
- eine Lanze (2), die in ein Gefäß (8) eingetaucht wird, das die aufzuschäumende Milch enthält, und die mit einem Kanal zum Ausgeben eines Stroms eines Dampf- und Luftgemischs versehen ist,
- einen Temperaturfühler (26), der am Ende dieser Lanze angeordnet ist,
- Absperrmittel für die Dampf- und Luftströme, die in die Kanäle eingefügt sind, die der Lanze diese Ströme zuführen,
- ein Venturi-Rohr (14), dessen stromaufwärts befindlicher Kanal über ein erstes normalerweise geschlossenen Magnetventil (16) mit einer Dampfquelle (4) verbunden ist, dessen stromabwärts befindlicher Kanal mit der Lanze verbunden ist und dessen Ansaugkanal (32) über ein zweites Magnetventil (22) mit einer Luftquelle verbunden ist, und
- eine Einheit zum Steuern der Magnetventile,
**dadurch gekennzeichnet, dass** das in den Ansaugkanal des Venturi-Rohrs eingefügte zweite Magnetventil (22) vom normalerweise geöffneten Typ ist und dass der Arbeitszyklus, durch den die Steuereinheit diese Magnetventile betätigt, einen ersten Schritt des Reinigens und des Entfernens der Feuchtigkeit, in dem das erste Ventil (16) des Dampfes und das zweite Ventil (22) der Luft beide geöffnet sind, und einen zweiten Schritt des bloßen Erhitzens, in dem das erste Magnetventil (16) geöffnet ist und das zweite Luft-Magnetventil (22) geschlossen ist, und einen dritten Schritt des Erhitzens und Aufschäumens umfasst, in dem beide Magnetventile (16, 22) geöffnet sind.

8. Vorrichtung nach Anspruch 7, **dadurch gekennzeichnet, dass** das Venturi-Rohr (14) einstückig mit der Lanze (2) ausgeführt ist.

9. Vorrichtung nach einem oder mehreren der vorhergehenden Ansprüche, **dadurch gekennzeichnet, dass** der am Auslassende der Lanze angeordnete Temperaturfühler (26) mit der Steuereinheit verbunden ist.

10. Vorrichtung nach einem oder mehreren der vorhergehenden Ansprüche, **dadurch gekennzeichnet, dass** die Dampfquelle aus einem Heizkessel (4) besteht, der normalerweise in einer Kaffeemaschine vorgesehen ist.

11. Vorrichtung nach einem oder mehreren der vorhergehenden Ansprüche, **dadurch gekennzeichnet, dass** die Lanze mit Hilfe einer Gelenkverbindung (12) drehbar an die Konstruktion der Kaffeemaschine montiert ist.

12. Vorrichtung nach einem oder mehreren der vorhergehenden Ansprüche, **dadurch gekennzeichnet, dass** eine Feder (10) mit der Lanze (2) verbunden ist, um sie elastisch in Richtung des darunter befindlichen Gitters zeigend zu halten, auf dem bei Kaffeemaschinen die Kanne (8) steht, die die aufzuschäumende Milch enthält.

13. Vorrichtung nach einem oder mehreren der vorhergehenden Ansprüche, **dadurch gekennzeichnet, dass** das Venturi-Rohr (14) einen zusammenlaufenden stromaufwärts befindlichen Teil, einen auseinanderlaufenden stromabwärts befindlichen Teil und einen Teil umfasst, der die zwei stromaufwärts und stromabwärts befindlichen Teile miteinander verbindet und einen kurzen zylindrischen Kanal (28) umfasst, auf den eine kleine zylindrische Mischkammer (30) mit einem geringfügig größeren Durchmesser folgt, in die sich der Luftansaugkanal (32) öffnet.

14. Vorrichtung nach einem oder mehreren der vorhergehenden Ansprüche, **dadurch gekennzeichnet, dass** das Venturi-Rohr (14) die folgenden Abmessungen hat:
- Durchmesser des zylindrischen Kanals: 1-2 mm,
- Länge des zylindrischen Kanals: 1-3 mm,
- Durchmesser der Mischkammer: 1-3 mm,
- Länge der Mischkammer: 2-6 mm,
- Durchmesser des Ansaugkanals: 0,2-1,5 mm.

## Revendications

1. Procédé de moussage de lait par soumission du lait à une étape de simple chauffage par un flux de vapeur qui sort d'une lance (2) immergée dans le lait et l'élève à une température prédéterminée inférieure à la température finale du lait moussé à obtenir, puis par soumission du lait déjà partiellement chauffé à une étape de chauffage et de moussage par un flux de vapeur et d'air qui est entraîné à travers un tube de Venturi (14) par le même flux de vapeur, **caractérisé en ce que** l'étape de simple chauffage est immédiatement précédée d'une étape de nettoyage et d'élimination de l'humidité dudit tube de Venturi dans laquelle étape ledit tube de Venturi (14) est traversé par un flux de vapeur et d'air entraîné par ladite vapeur et **en ce que** le flux de vapeur est régulé par une vanne solénoïde (16) normalement fermée et le flux d'air par une vanne solénoïde (22) normalement ouverte.

2. Procédé selon la revendication 1 , **caractérisé en ce que** lors du moussage du lait, sa température est régulée par une sonde de température appliquée à l'extrémité de la lance immergée dans le lait.

3. Procédé selon l'une ou plusieurs des revendications précédentes, **caractérisé en ce qu'**on régule les flux de vapeur et d'air par les vannes solénoïdes (16, 22) régulées par une unité de régulation, à laquelle la sonde de température est également connectée.

4. Procédé selon l'une ou plusieurs des revendications précédentes, **caractérisé en ce qu'**on met en oeuvre une étape de lavage de lance par un flux de vapeur après un nombre prédéterminé de cycles de moussage du lait.

5. Procédé selon l'une ou plusieurs des revendications précédentes, **caractérisé en ce qu'**on met en oeuvre une étape de lavage de lance par un flux de vapeur après un laps de temps prédéterminé depuis le dernier cycle de moussage du lait.

6. Procédé selon l'une ou plusieurs des revendications précédentes, **caractérisé en ce qu'**on empêche le commencement du cycle de moussage avant l'étape de lavage.

7. Dispositif de moussage de lait destiné à mettre en oeuvre le procédé selon l'une quelconque des revendications 1 à 6, comprenant :
- une lance (2) à immerger dans un récipient (8) contenant du lait à mousser et munie d'une conduite destinée à fournir un flux de mélange de vapeur et d'air,
- une sonde de température (26) située à l'extrémité de ladite lance,
- en ce qui concerne les flux de vapeur et d'air, des moyens d'arrêt insérés dans les conduites d'alimentation desdits flux dans ladite lance,
- un tube de Venturi (14) comportant une conduite en amont connectée à une source de vapeur (4) via une première vanne solénoïde (16) normalement fermée, comportant une conduite en aval connectée à ladite lance et comportant une conduite d'aspiration (32) connectée à une source d'air via une deuxième vanne solénoïde (22), et
- une unité de régulation desdites vannes solénoïdes
**caractérisé en ce que** la deuxième vanne solénoïde (22) insérée dans la conduite d'aspiration dudit tube de Venturi est de type normalement ouvert et le cycle de fonctionnement par lequel l'unité de régulation actionne lesdites vannes solénoïdes comprend une première étape de nettoyage et d'élimination de l'humidité dans laquelle la première vanne (16) pour la vapeur et la deuxième vanne (22) pour l'air sont toutes les deux ouvertes et une deuxième étape de simple chauffage, dans laquelle la première vanne solénoïde (16) est ouverte et la deuxième vanne solénoïde (22) est fermée, et une troisième étape de chauffage et de moussage, dans laquelle les deux vannes solénoïdes (16, 22) sont ouvertes.

8. Dispositif selon la revendication 7, **caractérisé en ce que** le tube de Venturi (14) fait partie intégrante de la lance (2).

9. Dispositif selon l'une ou plusieurs des revendications précédentes, **caractérisé en ce que** la sonde de température (26) située à l'extrémité de sortie de la lance est connectée à ladite unité de régulation.

10. Dispositif selon l'une ou plusieurs des revendications précédentes, **caractérisé en ce que** la source de vapeur est constituée d'un dispositif de chauffage (4), qui est normalement situé dans une machine à café.

11. Dispositif selon l'une ou plusieurs des revendications précédentes, **caractérisé en ce que** la lance est montée de manière articulée à la structure de ladite machine à café au moyen d'un joint articulé (12).

12. Dispositif selon l'une ou plusieurs des revendications précédentes, **caractérisé en ce qu'**un ressort (10) est associé à la lance (2) pour la maintenir pour qu'elle pointe de manière élastique vers la grille sous-jacente, sur laquelle, dans les machines à café, le pot (8) contenant le lait à mousser se trouve.

13. Dispositif selon l'une ou plusieurs des revendications précédentes, **caractérisé en ce que** le tube de Venturi (14) comprend une partie en amont convergente, une partie en aval divergente et une partie qui connecte les deux parties en amont et en aval ensemble, et comprend une courte conduite cylindrique (28) suivie par une petite chambre de mélange cylindrique (30), d'un diamètre légèrement plus grand, dans laquelle la conduite d'aspiration d'air (32) s'ouvre.

14. Dispositif selon l'une ou plusieurs des revendications précédentes, **caractérisé en ce que** le tube de Venturi (14) présente les dimensions suivantes :
- diamètre de la conduite cylindrique 1-2 mm,
- longueur de la conduite cylindrique 1-3 mm,
- diamètre de la chambre de mélange 1-3 mm,
- longueur de la chambre de mélange 2-6 mm,
- diamètre de la conduite d'aspiration 0,2-1,5 mm.
